# EUROPÄISCHE PATENTSCHRIFT

(11) **EP 2 705 567 B1**
(45) Veröffentlichungstag und Bekanntmachung des Hinweises auf die Patenterteilung: **19.07.2017**
(21) Anmeldenummer: 12726604.7
(22) Anmeldetag: 30.05.2012
(51) Int. Cl.: H01M 12/08, H01M 8/04

(54) **ELEKTRISCHER ENERGIESPEICHER**
ELECTRIC ENERGY STORE
ACCUMULATEUR D'ÉNERGIE ÉLECTRIQUE

(30) Priorität: 17.06.2011 DE 102011077695
(43) Veröffentlichungstag der Anmeldung: 12.03.2014
(73) Patentinhaber: Siemens Aktiengesellschaft, 80333 München (DE)
(72) Erfinder: HANEBUTH, Marc, 90491 Nürnberg (DE); KOSSE, Sylvio, 91052 Erlangen (DE); LENK, Uwe, 08064 Zwickau (DE); BLENDINGER, Stefan, 90768 Fürth (DE)
(86) Internationale Anmeldenummer: PCT/EP2012/060157
(87) Internationale Veröffentlichungsnummer: WO 2012/171796

(56) Entgegenhaltungen:
- EP-A1- 1 953 858
- EP-A1- 2 254 182
- EP-A2- 1 798 488
- WO-A1-2008/099575

## Beschreibung

Die Erfindung betrifft einen elektrischen Energiespeicher nach dem Oberbegriff des Patentanspruchs 1.

Ein Konzept eines elektrischen Energiespeichers sieht die Verwendung eines Metalls in Verbindung mit einer Luftelektrode vor. Als sauerstoffleitender Feststoffelektrolyt kann beispielsweise Yttrium- oder Scandium-stabilisiertes Zirkondioxid verwendet werden. Diese Elektrolyten zeigen eine hochselektive Sauerstoffleitung, benötigen jedoch relativ hohe Betriebstemperaturen von typischerweise mehr als 600°C.

Da für den Betrieb einer Luftbatterie zumindest zeitweise Luft benötigt wird und diese weiterhin auf einer Mindesttemperatur gebracht werden muss, wird angestrebt, den Massenstrom der Luft möglichst niedrig zu halten und nur soviel Luft anzubieten, wie für die elektrochemische Reaktion tatsächlich benötigt wird. Auf diese Weise lassen sich Wärmeverluste minimieren, die unweigerlich wegen der Abgabe des heißen Abgases an die Umwelt entstehen würden. Es kann stets nur ein Teil der Wärme aus dem Abgasstrom wirtschaftlich zurückgewonnen werden.

Eine technische Herausforderung von Hochtemperaturluftbatterien sind die stets auftretenden Temperaturgradienten, die zu termischen Spannungen führen. Daher dürfen die Temperaturgradienten je nach Bauart einen kritischen Wert nicht übersteigen, um den Stack (in der Regel ein Stapel mehrerer Einzelzellen) nicht zu beschädigen. Neben der thermischen Spannung kann aber auch die absolute Temperatur limitierend sein. Berechnungen haben gezeigt, dass die Temperatur des Gasstromes über einen Wert von 1000°C, theoretisch sogar über 1500°C, steigen kann, wenn ein entsprechend niedriger Luftstrom gewählt wird. Solch hohe Temperaturen sind unerwünscht, weil es für solche Temperaturen keine kostengünstigen Materialien gibt und zudem große Wärmeverluste durch die Isolation auftreten würden.

Eine weitere technische Herausforderung besteht darin, dass die Batterien häufig in einem Standby-Betrieb verweilen müssen. Die Anforderung an die Batterien besteht dabei häufig darin, dass die Batterien innerhalb weniger Minuten in Betrieb gehen müssen und dabei in kürzester Zeit nahezu maximale Leistung erbringen müssen. Aus diesem Grund darf die Batterie im Standby-Betrieb nicht auskühlen und sollte stets auf annähernder Betriebstemperatur gehalten werden.

Ferner sei noch auf die EP 2 254182 A1 und die WO 2008/099575 A1 verwiesen, die jeweils Brennstoffzellenanordnungen zeigen, die jeweils einen abgeschlossenen Raum aufweisen, in dem mehrere Stacks angeordnet sind. Die WO 2008/099575 A1 beschreibt zudem noch eine Vorheizvorrichtung die dazu dient, die Stacks auf die entsprechende Betriebstemperatur zu bringen.

Die Aufgabe der Erfindung besteht insbesondere darin, einen elektrischen Energiespeicher der oben beschriebenen Art bereitzustellen, bei dem der Temperaturgradient zwischen einzelnen Stacks gegenüber dem Stand der Technik minimiert ist.

Die Lösung der Aufgabe besteht in einem elektrischen Energiespeicher mit den Merkmalen des Patentanspruchs 1.

Der elektrische Energiespeicher nach Patentanspruch 1 weist einen thermisch isolierten Raum auf, der wiederum einen Prozessgaseinlass und einen Prozessgasauslass aufweist. In diesem isolierten Raum sind mindestens zwei Stacks angeordnet, die jeweils wiederum mindestens eine elektrochemische Zelle umfassen, wobei jeder Stack wiederum einen Prozessgaseinlass und einen Prozessgasauslass aufweist. Die Erfindung zeichnet sich dadurch aus, dass mindestens zwei Stacks bezüglich der Prozessgasführung in Reihe geschaltet sind.

Es hat sich erstaunlicherweise herausgestellt, dass eine Reihenschaltung der Stacks, das bedeutet, dass ein Prozessgasauslass eines ersten Stacks gleichzeitig den Prozessgaseinlass eines zweiten Stacks bildet, keine nennenswerten Effizienzeinbußen bei einem niedrigeren Temperaturgradienten bewirkt. Die durch die Reihenschaltung hervorgerufenen Druckverluste in der Prozessgasleitung führen nicht zu einer signifikant niedrigeren Leistung der in Reihe geschalteten Stacks.

In einer weiteren zweckmäßigen Ausgestaltungsform der Erfindung ist zwischen einem ersten Stack und dem zweiten Stack, die in Reihe geschaltet sind, noch ein Wärmetauscher angeordnet. Dieser Wärmetauscher bewirkt, dass das Prozessgas, das insbesondere im Entladeprozess aus dem Stack austritt, eine erhöhte Temperatur aufweist, wieder herabgekühlt wird und in einer nur leicht erhöhten Temperatur in den zweiten Stack einströmt.

Hierbei ist es zudem zweckmäßig, dass der Wärmetauscher mit einem Wärmespeicher in thermischem Kontakt steht, der wiederum die Wärme speichert und bei dem typischerweise endothermen Ladeprozess der Batterie dem Prozessgas thermische Energie wieder zur Verfügung stellt und es aufheizt.

Weiterhin besonders vorteilhaft ist es, wenn ein Einlasswärmetauscher vorgesehen ist, der zwischen der Prozessgaszufuhr des isolierten Raumes und dem ersten Stack vorgesehen ist, wobei dieser Einlasswärmetauscher wiederum in thermischem Kontakt mit dem Wärmespeicher steht. Durch den Einlasswärmetauscher kann das Prozessgas, das zwar außerhalb des isolierten Raumes vorgeheizt wird, aber noch nicht die endgültige Prozesstemperatur aufweist, auf eine gewünschte Prozesstemperatur angehoben werden. Dabei ist es vorteilhaft, wenn der Einlasswärmetauscher in thermischem Kontakt mit dem Wärmespeicher und somit mit mehreren Wärmetauschern, die in Reihe gesehen hinter dem ersten Stack angeordnet sind, steht. Somit wird die Wärmeenergie, die das Prozessgas nach dem Durchlauf durch den ersten Stack über den Wärmetauscher abgegeben hat, auf den Einlasswärmetauscher übertragen, wodurch diese Abwärme genutzt werden kann, um das Prozessgas, das in den isolierten Raum einströmt, vorzuwärmen.

Als zweckmäßige Bauweise für einen derartigen Wärmespeicher hat sich ein so genannter Latentwärmespeicher herausgestellt. Ein Latentwärmespeicher ist so ausgelegt, dass er ein Material aufweist, das durch einen Phasenübergang von fest-flüssig in dem gewählten Temperaturbereich durch die Schmelzenthalpie besonders hohe Wärmeaufnahmevermögen aufweist.

Dabei ist es zweckmäßig, eine Phasenumwandlungstemperatur des Speichermaterials des Latentwärmespeichers so zu wählen, dass sie oberhalb einer Prozessgaseinlasstemperatur und unterhalb einer Prozessgasauslasstemperatur des Prozessgases beim Eintritt bzw. Austritt in dem isolierten Raum liegt. Auf diese Art und Weise ist es möglich, den Wärmetauscher wirtschaftlich bei kleinem Bauraum zu betreiben.

Ebenfalls zweckmäßig ist eine Ausstattung des Wärmespeichers mit einem Heizelement, das dazu beiträgt, den elektrischen Energiespeicher in der so genannten Startup-Phase beim Kaltstart vorzuheizen.

Ebenfalls zweckmäßig ist es, neben der bereits erwähnten Reihenschaltung von Stacks eine oder mehrere weitere Reihenschaltungen von mindestens zwei Stacks anzuordnen. Es sollten Wärmetauscher einer jeden Reihenschaltung jeweils mit einem Wärmespeicher in thermischem Kontakt stehen. Dabei können alle Wärmetauscher eines elektrischen Energiespeichers, d.h. eines isolierten Raumes eines elektrischen Energiespeichers, mit einem einzigen Wärmespeicher in thermischem Kontakt stehen, es kann aber für jede Reihenschaltung jeweils auch ein separater Wärmespeicher vorgesehen sein.

Hierbei ist es zweckmäßig, dass der Einlasswärmetauscher im Wärmespeicher so angeordnet ist, dass er von weiteren Wärmetauschern der in Reihe geschalteten Stacks umgeben ist, damit der Wärmeüberganz zu ihm möglichst groß ist und das Prozessgas auf diese Weise optimal vorwärmt werden kann.

Für eine bessere Temperaturführung des Reaktionsgases kann es wiederum zweckmäßig sein, dass der Wärmespeicher, der in dem isolierten Raum angeordnet ist, wiederum gegenüber diesem thermisch isoliert ist.

Weitere Ausgestaltungsformen und weitere Merkmale der Erfindung werden anhand der folgenden Figuren näher erläutert. Diese Figuren stellen für sich genommen keine Einschränkung des Schutzbereiches dar, da es sich lediglich um exemplarische Ausgestaltungsformen handelt.

Dabei zeigen:
- Figur 1: eine schematische Darstellung eines elektrischen Energiespeichers mit einem isolierten Raum und einem davor geschalteten Wärmetauscher,
- Figur 2: eine vergrößerte Darstellung des isolierten Raumes eines elektrischen Energiespeichers,
- Figur 3: eine schematische Darstellung der Reihenschaltung von mehreren Stacks,
- Figur 4: die schematische Anordnung der in Figur 3 dargestellten Wärmetauscher in einem Wärmespeicher,
- Figur 5: die Anordnung der Wärmetauscher aus Figur 3 in einem Wärmespeicher als Draufsicht,
- Figur 6: verschiedene Ausgestaltungsformen von Wärmetauschern.
- Figur 7: einen schematischen Temperaturverlauf eines Prozessgases, das abwechselnd Latentwärmespeicher und Stacks durchläuft,
- Figur 8: schematische Darstellung der Wirkungsweise eines ROB.

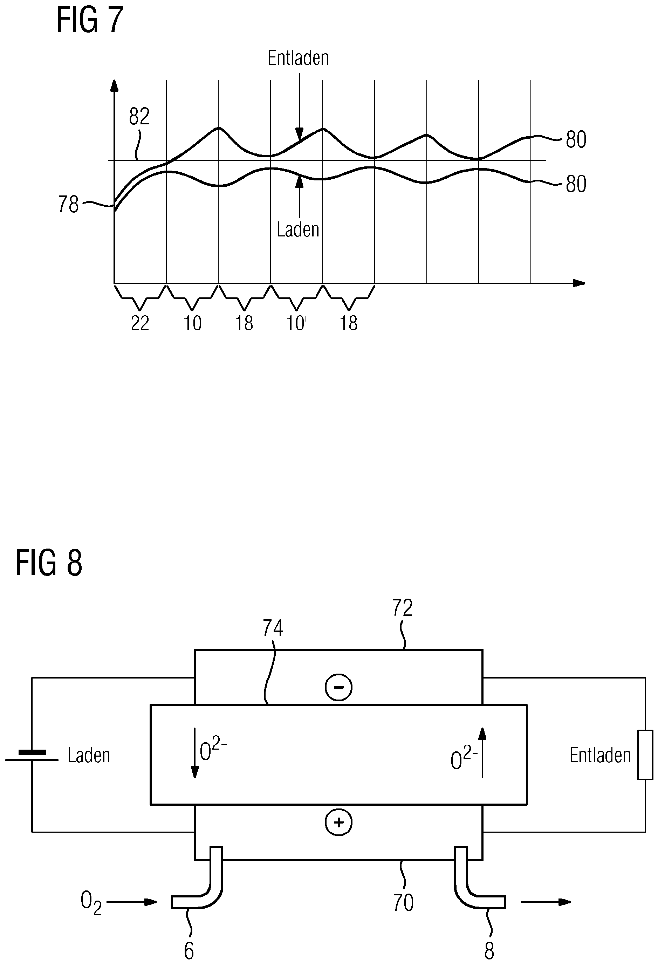

Anhand der Figur 8 soll grob die Wirkungsweise einer Rechargeable Oxide Battery (ROB), bzw. einer darin angewandten elektrochemischen Zelle, beschrieben werden, soweit dies für die folgende Beschreibung der Erfindung notwendig ist.

Ein üblicher Aufbau einer ROB besteht darin, dass einer positiven Elektrode 70 ein Prozessgas, insbesondere Luft über einer Prozessgaszufuhr 76, zugeführt wird, wobei, je nach Betriebszustand, aus der Luft Sauerstoff entzogen oder an die Luft abgegeben wird, der in Form von Sauerstoffionen (O²⁻) durch einen Festkörperelektrolyten 74 zu einer negativen Elektrode 72 oder einer positiven Elektrode 70 gelangt. An der negativen Elektrode wird er je nach Betriebszustand entladen bzw. geladen, aufoxidiert oder reduziert. Würde nun an der negativen Elektrode eine feste Schicht des zu oxidierenden bzw. reduzierenden Materials (z. B. wird hierfür Eisen, Mangan oder Nickel verwendet) vorliegen, so wäre die Ladekapazität der Batterie schnell erschöpft. Aus diesem Grund ist es zweckmäßig, einer negativen Elektrode ein Energiespeichermedium in Form eines porösen Körpers einzusetzen, der das funktional wirkende oxidierbare Material, also in zweckmäßiger Form das Metall enthält.

Über ein, bei Betriebszustand der Batterie gasförmiges Redoxpaar, beispielsweise H₂/H₂O, wird der Sauerstoff durch die Porenkanäle des porösen Körpers zu dem oxidierbaren Material, also dem Metall, transportiert. Je nachdem, ob ein Lade- oder Entladevorgang vorliegt, wird das Metall bzw. Metalloxid oxidiert oder reduziert und der hierfür benötigte Sauerstoff durch das gasförmige Redoxpaar H₂/H₂O angeliefert oder zum Festkörperelektrolyten 74 zurücktransportiert. Dieser Mechanismus wird auch als Shuttlemechanismus bezeichnet.

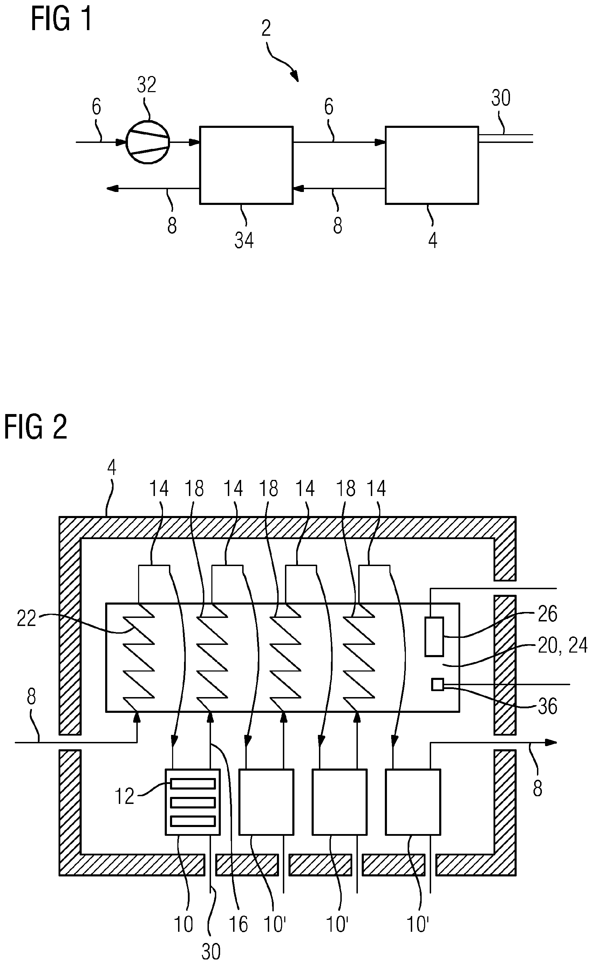

In Figur 1 ist rein schematisch in Kästchenform der Aufbau eines elektrischen Energiespeichers in Form einer ROB dargestellt. Er umfasst als wesentliches Bauteil einen thermisch isolierten Raum 4, der einerseits einen Prozessgaseinlass 6 und einen Prozessgasauslass 8 aufweist. Der Prozessgaseinlass 6 und der Prozessgasauslass 8 werden wiederum in einem Wärmetauscher 34 so gegeneinander geleitet, dass das heißere Gas im Prozessgasauslass in einem vorgeschalteten Wärmetauscher 34 einen Teil seiner thermischen Energie an das kältere Gas überträgt. Zur Bereitstellung des benötigten Strömungsdrucks des Prozessgases ist vor dem Wärmetauscher 34 noch ein Gebläse 32 vorgeschaltet.

Im Weiteren wird insbesondere auf die Anordnung der einzelnen Komponenten in dem thermisch isolierten Raum 4 eingegangen. Hierfür ist eine vergrößerte Darstellung des isolierten Raumes 4, der in der Fachsprache auch als Hot-Box bezeichnet wird, in Figur 2 dargestellt.

Zunächst einmal weist der isolierte Raum 4 den bereits zu Figur 1 beschriebenen Prozessgaseinlass 6 und den Prozessgasauslass 8 auf. In dem isolierten Raum 4 sind nun mehrere so genannte Stacks 10 bzw. 10' angeordnet. Jeder der Stacks 10, 10' enthält wiederum mindestens eine, in der Regel aber mehrere elektrochemische Zellen 12 (vgl. Beschreibung zu Figur 8), auf deren Wirkungsweise an dieser Stelle nicht eingegangen werden soll. Es sei angemerkt, dass jeder Stack wiederum das einströmende Prozessgas durch ein so genanntes Manifold auf die einzelnen Speicherzellen 12 verteilt, wobei durch jede einzelne elektrochemische Zelle 12 das Prozessgas fließt, wodurch wiederum die beschriebene elektrochemische Reaktion in Gang gesetzt wird, die zur Speicherung von elektrischer Energie bzw. zur Abgabe von elektrischer Energie führt. Die elektrische Energie wird durch die elektrischen Zu- bzw. Ableitungen 30 zugeführt oder abgeleitet.

Die einzelnen Stacks 10 und 10' in dem isolierten Raum 4 zeichnen sich dadurch aus, dass sie bezüglich ihres Prozessgaseinlasses 14 und ihres Prozessgasauslasses 16 in Reihe geschaltet sind. Das bedeutet, der Prozessgasauslass 16 des Stacks 10 stellt wiederum den Prozessgaseinlass 14 des Stacks 10' dar. Hierbei ist es zweckmäßig, so viel wie mögliche Stacks hintereinanderzuschalten, wobei sich herausgestellt hat, dass eine Anzahl von acht hintereinander geschalteten Stacks aus thermischen Gründen nicht überschritten werden sollte, da die positiven Eigenschaften der thermischen Prozessgasführung bei mehr als acht Stacks nicht mehr in vorteilhaftem Maße auftreten.

Zwischen dem Prozessgaseinlass 6 in den isolierten Raum 4 und dem Prozessgaseinlass 14 in den ersten Stack 10 ist ein Einlasswärmetauscher 22 vorgesehen. Nach Austritt des Prozessgases aus dem ersten Stack 10, also dem Prozessgasauslass 16 des Stacks 10, und dem Prozessgaseinlass 14 des zweiten Stacks 10' ist wiederum ein weiterer Wärmetauscher 18 angeordnet. Zwischen dem weiteren in Reihe geschalteten Stack 10' ist in analoger Weise ebenfalls ein Wärmespeicher 18 angeordnet. Sowohl der Eingangswärmetauscher 22 als auch die weiteren Wärmetauscher 18 stehen in thermischem Kontakt mit einem Wärmespeicher 20, der in Form eines Latentwärmespeichers 24 ausgestaltet ist. Auf die Wirkungsweise des Wärmespeichers wird noch im Folgenden eingegangen werden. Der Eingangswärmetauscher 22, der auf der einen Seite direkt neben dem Prozessgaseinlass 6 mit dem isolierten Raum 4 in Verbindung steht, ist somit dem ersten Stack 10 vorgeschaltet, und steht in thermischem Kontakt mit den übrigen Wärmetauschern 18. Das Prozessgas, das durch die Leitung 6 in den isolierten Raum 4 gelangt, ist gemäß der Figur 7 kälter als das Prozessgas, das bereits einen oder mehrere Stacks durchlaufen hat (vgl. Fig. 7 der schematisch die Prozessgastemperatur für einen Lade- bzw. Entladevorgang bei Eintritt und Austritt aus dem isolierten Raum und zwischen den einzelnen Stacks). Da der Eingangswärmetauscher 22 in engem, thermischem Kontakt mit den übrigen Wärmetauschern 18 steht, wird das eingehende Prozessgas bereits vor Eintritt in den ersten Stack 10 auf eine Temperatur angehoben, die im Wesentlichen einer mittlere Temperatur entspricht, die zwischen den einzelnen Stacks 10, 10' vorherrscht (vgl. Figur 7).

In dem Wärmespeicher 20, 24 ist ferner ein Heizelement 26 vorgesehen, das bevorzugt mit einem Temperatursensor 36 gekoppelt ist, wodurch der Wärmeinhalt des Wärmespeichers 20, 24 kontrolliert werden kann bzw. beeinflusst werden kann. Insbesondere kann für einen Kaltstart des elektrischen Energiespeichers 2 der Wärmespeicher 20, 24 vorgewärmt werden, damit der elektrische Energiespeicher möglichst schnell einsatzbereit ist (Startup).

Insbesondere für eine so genannte Standby-Zeit, in der weder elektrische Energien in den Energiespeicher 2 eingebracht wird noch elektrische Energie abgezogen wird, muss der elektrische Energiespeicher 2 innerhalb von kurzer Zeit einsatzbereit sein. Hierfür hat es sich herausgestellt, dass der in dem thermisch isolierten Raum 4 angeordnete Wärmespeicher 20, 24, der gegebenenfalls auch wiederum diesen gegenüber isoliert sein kann, sehr gut geeignet ist, den Energiespeicher in kürzester Zeit in den entsprechende Lade- bzw. Entlademodus zu versetzen.

Im Weiteren soll auf die Funktionsweise eines Latentwärmespeichers 24 eingegangen werden. Als Material für einen Latentwärmespeicher 24 hat sich ein Salzkörper in Form von Natriumchlorid oder Calciumchlorid möglichst in reinster Form als zweckmäßig erwiesen. Der Vorteil bei der Verwendung eines Reinstoffes besteht darin, dass er einen konstanten Schmelzpunkt aufweist und die Betriebstemperatur in einem kleinen Temperaturfenster von weniger als 20° gehalten werden kann. Es kann alternativ auch ein anderer Reinstoff oder ein eutektisches Gemisch verwendet werden, das ebenfalls einen konstanten Schmelzpunkt im passenden Temperaturbereich aufweisen sollte. Überschüssige Wärme bei elektrischen Energiespeichern auf Luftbasis, typischerweise im Entlademodus, wird als Schmelzwärme zwischengespeichert und zu einem späteren Zeitpunkt, also im Standby- oder Lademodus, in Form von Erstarrungswärme zurückgewonnen.

Bei den Latentwärmespeichern ist eine geschlossene Form zweckmäßig, gegebenenfalls sollte ein Druckausgleich, der durch die Volumenänderung des Materials hervorgerufen wird, gewährleistet sein. Hierbei ist es zweckmäßig, ein Puffervolumen vorzuhalten, das eine auftretende Volumenänderung während des Phasenüberganges des Wärmespeichers oder während des Aufheizens bzw. der Abkühlperiode ermöglicht, ohne den Behälter des Latentwärmespeichers zu beschädigen. Im Latentwärmespeicher sollten sich ein Sensor oder mehrere Sensoren 36 zur Kontrolle des Zustandes des Latentwärmespeichers 24 befinden, die z. B. als Temperaturfühler oder für die Bestimmung der elektrischen oder thermischen Leitfähigkeit dienen. In Figur 7 ist eine Phasenumwandlungstemperatur des Latentwärmespeichers aufgezeigt, die oberhalb der Lufteintrittstemperatur und unterhalb der maximalen Betriebstemperatur des Systems liegt.

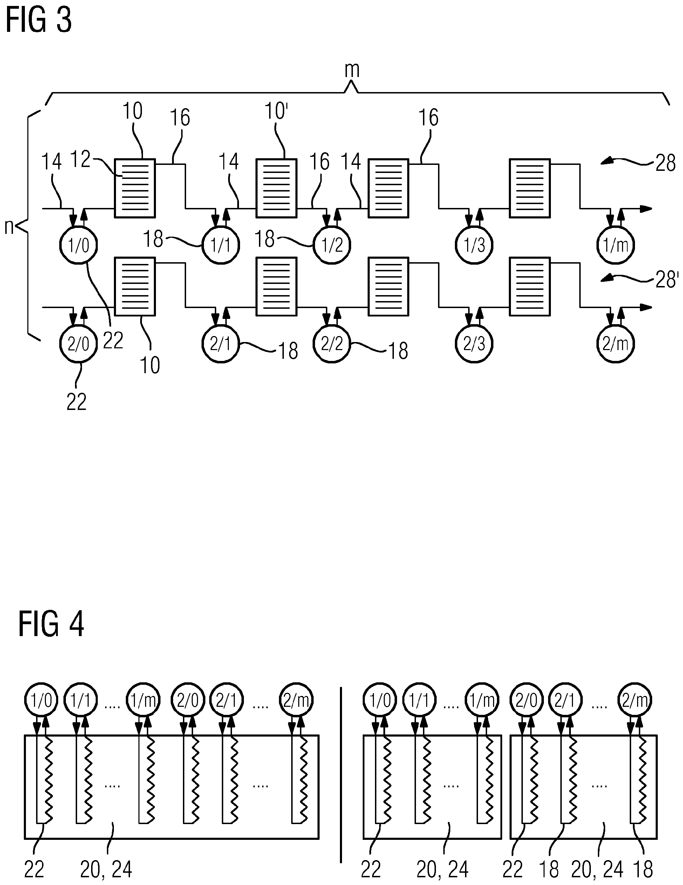

In den Figuren 3 bis 5 sind schematisch zweckmäßige Anordnungen der Stacks und der Wärmetauscher bzw. der Wärmetauscher bezüglich des Wärmespeichers dargestellt. In Figur 3 ist zunächst im oberen Bereich eine Reihenschaltung 28 von mehreren Stacks 10 bzw. 10' dargestellt, die jeweils einen Prozessgaseinlass 14 und einen Prozessgasauslass 16 aufweisen, wobei der Prozessgasauslass 16 des Stacks 10 wiederum einen Prozessgaseinlass 14 des nachfolgenden Stacks 10' darstellt. Zwischen dem Prozessgasauslass 16 und dem Prozessgaseinlass 14 ist ein Wärmetauscher 18 angeordnet, der in Figur 3 die Bezeichnung 1/1 trägt. Auf diese Nomenklatur wird noch eingegangen werden. Ferner ist vor dem Stack 10 der Eingangswärmetauscher 22 angeordnet, der die Bezeichnung 1/0 trägt. Es handelt sich also im oberen Bereich um die erste Reihenschaltung 28, darunter ist eine zweite Reihenschaltung 28' dargestellt. Die Reihenschaltungen 28 und 28' und gegebenenfalls noch folgende Reihenschaltungen 28', die nicht dargestellt sind, sind bezüglich des Prozessgaseinlasses 6 bzw. Prozessgasauslasses 8 aus dem thermisch isolierten Raum 4 parallelgeschaltet.

In Figur 3 sind die Reihenschaltungen 28 und 28' entsprechend der davor senkrecht dargestellten geschweiften Klammer mit einem kleinen n bezeichnet. Die einzelnen Stacks, die in jeder Reihenschaltung 28 in Reihe geschaltet sind, werden mit einem kleinen m bezeichnet. Die Wärmetauscher, die vor dem Stack 10 (Eingangswärmetauscher 22) und zwischen den Stacks 10, 10' (Wärmetauscher 18) angeordnet sind, weisen in ihrer Bezeichnung als erste Ziffer den Platzhalter n auf, also die Nummerierung der jeweiligen Reihenschaltung 28 und hinter dem Querstrich als zweite Ziffer m ihre Position innerhalb der jeweiligen Reihenschaltung 28, 28'. Der Eingangswärmetauscher 22 erhält demnach als zweite Ziffer immer die Ziffer 0, da er vor dem ersten Stack 10 angeordnet ist. Der Wärmetauscher 18 hinter dem ersten Stack erhält in jeder Reihenschaltung 28 immer die Ziffer 1, darauffolgend die Ziffer 2, 3 usw. In der Reihenschaltung 28' steht an erster Stelle die Ziffer 2, der Eingangswärmetauscher 22 der Reihenschaltung 28' hat dementsprechend als erste Ziffer die Ziffer 2, hinter dem Querstrich die Ziffer 0 usw. Auf diese Art können in jedem Energiespeicher beliebig viele, also n Reihenschaltungen 28 bzw. 28' mit theoretisch beliebig vielen, also m in Reihe geschalteten Stacks 10, 10' parallelgeschaltet werden.

Dabei können sowohl alle Wärmetauscher 22, 18 in direktem thermischem Kontakt mit einem einzigen Wärmespeicher 20, 24 stehen. Dies ist in Figur 4, linke Seite, veranschaulicht. Grundsätzlich können aber auch, wie dies in Figur 4, rechte Seite, dargestellt ist, für jede Reihe 28, 28' insgesamt n Wärmespeicher 20, 24 verwendet werden.

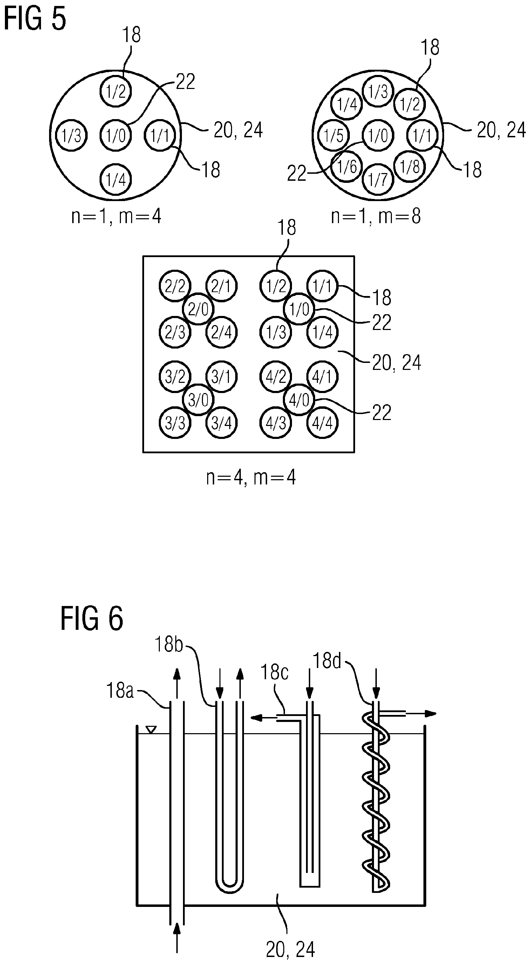

In Figur 5 ist eine Draufsicht auf die in den Wärmespeichern 20, 24 angeordneten Wärmetauscher 18, 22 gegeben. Links oben ist hierbei ein Wärmespeicher 20, 24 dargestellt, der nur eine Reihe 28 an hintereinandergeschalteten Stacks 10, 10' enthält, wobei m = 4, also vier hintereinandergeschaltete Stacks 10, 10' vorgesehen sind. Der Eingangswärmetauscher 22 ist hierbei möglichst mittig zwischen den übrigen Wärmetauschern 18 angeordnet, damit er eine möglichst hohe Temperatur erhält. Er ist also gegenüber den anderen Wärmetauschern 18 zentral im Wärmespeicher 20, 24 angeordnet. Eine analoge Darstellung ist in Figur 5 rechts oben gegeben, wo jeweils wiederum der Eingangswärmetauscher 22 (1/0) von den übrigen Wärmetauschern 18 umgeben ist. Hierbei handelt es sich um Darstellungen, die der Figur 4, rechte Seite, entsprechen, jede Reihe 28 bzw. 28' hat ihren eigenen Wärmespeicher 20, 24, dem sämtliche Wärmetauscher 18, 22 der Reihe 28 zugeordnet sind.

Grundsätzlich ist es auch möglich, wie dies in Figur 5, unterer Teil, in dem rechteckigen Kasten, dargestellt ist, dass alle Wärmetauscher einer jeglichen Reihe 28, 28' in einem Wärmespeicher 20, 24 angeordnet sind. Hierbei ist die Anzahl der einzelnen Reihen 28, 28' mit m = 4 angegeben, jeder Reihe 28, 28' hat wiederum vier Stacks 10, 10', zwischen denen jeweils ein Wärmetauscher 18 angeordnet ist, wobei die Wärmetauscher 18 einer jeglichen Reihe 28, 28' wiederum ihren Eingangswärmetauscher 22 umgeben.

In Figur 6 sind exemplarisch vier mögliche Darstellungen eines Wärmetauschers 18, die jeweils mit einem zusätzlichen kleinen Buchstaben a bis d konkretisiert sind, dargestellt. Bei dem Wärmetauscher 18a handelt es sich um eine einfache Ausführung für einen Wärmetauscher, die technisch einfach umsetzbar ist, jedoch bezüglich der Dichtigkeit und der beim Wärmespeicher auftretenden Temperaturausdehnungen bzw. Kontraktionen einen höheren Aufwand an Dichtungstechnik erfordert. Dieser Aufwand ist bei dem etwas komplizierter gestalteten Wärmetauscher 18b in U-Rohrform nicht erforderlich. Weitere vorteilhafte Ausgestaltungen liegen in Form des Wärmetauschers 18c vor, der ähnlich einer so genannten Waschflasche, wie sie in chemischen Chemielabors üblich ist, ausgestaltet ist. Ebenfalls kann ein Wärmetauscher mit einer üblichen Spiralwendelform, wie dies der Wärmetauscher 18d darstellt, zweckmäßig sein.

Besonders vorteilhaft ist es, wenn mit Ausnahme des Eingangswärmetauschers 22 jeweils dieselbe Bauform für die Wärmetauscher angewandt wird. Der zentrale Wärmetauscher 22 sollte nur dann anders ausgeführt werden, wenn sonst kein hinreichender Wärmetransport im Wärmespeichermedium bzw. am Wärmeübergang am Wärmetauscher selbst gewährleistet werden kann. Der Eingangswärmetauscher einer jeden Reihenschaltung 28 wird in der Richtung durchströmt, wie dies in Figur 6 dargestellt ist. Bei der Bauform nach Wärmetauscher 18a ist dies bezüglich der Figur 6 von unten nach oben. Dies führt dazu, dass in sämtlichen Betriebszuständen eine feste Phase, also ein Kristallisationskeim, für den Latentwärmespeicher im unteren Bereich des zentralen Wärmetauschers vorliegt. Ein Kristallwachstum erfolgt somit in erster Linie von unten nach oben, also entgegen der Schwerkraft, so dass die überstehende flüssige Phase im Latentwärmespeicher nach oben in das hierfür vorgesehene Puffervolumen (graphisch nicht dargestellt) verdrängt wird, ohne zusätzliche mechanische Spannungen zu erzeugen. Die äußeren Rohre der Wärmetauscher, also der Wärmetauscher 18 in Figur 5, können in beliebige Richtung durchströmt werden oder möglicherweise sogar in vorteilhafter Weise in entgegengesetzter Richtung des Eingangswärmetauscher 22, der zentral angeordnet ist. Es ist auch möglich, dass die Wärmetauscher 18, die um den Eingangswärmetauscher 22 angeordnet sind, abwechselnd in entgegengesetzter Richtung durchströmt werden.

Grundsätzlich ist auch festzuhalten, dass der Wärmetauscher 18 nach einem letzten in Reihe geschalteten Stack 10 optional ist, sein Einsatz hängt davon ab, welche Temperatur je nach Bauweise hinter dem letzten Stack 10 vorliegt.

Der Eingangswärmetauscher 22 einer jeden Reihe 18 wärmt das einströmende Gas vor und ist demnach zentral angeordnet. Er ist von den anderen Wärmetauschern 18 derselben Reihe 28 umgeben. Da die Gastemperatur bei jedem Betriebszustand unterhalb der Phasenumwandlungstemperatur des Wärmespeichermediums des Latentwärmespeichers 24 liegt, eignet sich der Bereich des zentralen Wärmetauschers für das Vorhalten von Kristallisationskeimen in Form einer festen Phase.

Die bereits beschriebenen Sensoren im Wärmespeicher 20, 24 dienen insbesondere auch dazu, um ein Phasenübergang an genau dieser Stelle zu erfassen. Dies kann ein Temperaturfühler, ein Sensor für elektrische Leitfähigkeit oder Wärmeleitfähigkeit sein. Dieser ist zweckmäßigerweise im unteren Bereich in der Nähe des zentralen Wärmetauschers, also des Eingangswärmetauschers 22, lokalisiert. Alternativ können ein oder mehrere Temperatursensoren innerhalb des Gasstromes des Eingangswärmetauschers 22 eingebracht sein. Zusätzlich können an weiteren Stellen innerhalb des Gasstroms oder Speichers Sensoren platziert sein.

Ferner ergeben sich technische Herausforderungen bei der Verwendung von Latentwärmespeichern in eine Flüssig-Fest-PhasenUmwandlung:
Der Phasenübergang von flüssig zu fest bewirkt in den allermeisten Fällen eine Volumenzunahme. Es ist also stets darauf zu achten, dass ein entsprechendes Volumen für die Phasenumwandlung bereitsteht, in welches sich das Speichermedium bei Bedarf ausdehnen kann. Auf diese Weise wird eine Beschädigung durch mechanische Spannungen vermieden.

Um das Batteriesystem möglichst einfach zu halten, ist es wünschenswert, die Richtung, in der das Gas durch die verschiedenen Komponenten bzw. Stacks strömt, für jeden Betriebszustand beizubehalten, andernfalls wäre eine relativ komplexe Ventilschaltung nötig.

Weiterhin muss sichergestellt werden, dass der Wärmeübergang zwischen Gasstrom und Wärmespeicher 20, 24 selbst dann hinreichend groß ist, wenn der Wärmespeicher 20, 24 in erster Linie in fester Form vorliegt, da hier von einem schlechten Wärmeübergangskoeffizienten auszugehen ist.

Um Kristallisationsverzögerung und Übersättigung innerhalb des Wärmespeichers zu vermeiden, sollte stets an dem Ort, an dem eine Kristallisation stattfinden soll, ein Teil des Speichermediums bereits in fester Form vorliegen, um als Kristallisationskeim zu fungieren.

Weiterhin muss bei der räumlichen Anordnung des Wärmespeichers darauf geachtet werden, dass möglichst die gesamte Menge des Speichermaterials ausgenutzt wird.

## Patentansprüche

1. Elektrischer Energiespeicher mit einem thermisch isolierten Raum (4), der einen Prozessgaseinlass (6) und einen Prozessgasauslass (8) aufweist, wobei im thermisch isolierten Raum (4) mindestens zwei Stacks (10) mit jeweils wiederum mindestens einer elektrochemischen Speicherzelle (12) angeordnet sind und wobei jeder Stack (10) wiederum einen Prozessgaseinlass (14) und einen Prozessgasauslass (16) aufweist und mindestens zwei Stacks 10, 10' bezüglich der Prozessgasführung in Reihe geschaltet sind **dadurch gekennzeichnet, dass** zwischen dem Prozessgasauslass (16) des ersten Stacks (10) und dem Prozessgaseinlass (14) des zweiten Stacks (10'), die in Reihe geschaltet sind, ein Wärmetauscher (18) angeordnet ist und der Wärmetauscher (18) mit einem Wärmespeicher (20) thermisch in Kontakt steht.

2. Elektrischer Energiespeicher nach Anspruch 1, **dadurch gekennzeichnet, dass** ein Einlasswärmetauscher (22) zwischen Prozessgaszufuhr (6) und erstem Stack (10) vorgesehen ist, der mit dem Wärmespeicher (20) thermisch in Kontakt steht.

3. Elektrischer Energiespeicher nach einem der Ansprüche 1 oder 2, **dadurch gekennzeichnet, dass** der Wärmespeicher (20) ein Latentwärmespeicher (24) ist.

4. Elektrischer Energiespeicher nach Anspruch 3, **dadurch gekennzeichnet, dass** eine Phasenumwandlungstemperatur eines Speichermaterials des Latentwärmespeichers (24) oberhalb einer Prozessgaseinlasstemperatur und unterhalb einer Prozessgasauslasstemperatur liegt.

5. Elektrischer Energiespeicher nach einem der Ansprüche 1 bis 4, **dadurch gekennzeichnet, dass** im Wärmespeicher (20, 24) ein Heizelement (26) angeordnet ist.

6. Elektrischer Energiespeicher nach einem der Ansprüche 1 bis 5, **dadurch gekennzeichnet, dass** zwei oder mehrere Reihenschaltungen (n) von mindestens zwei Stacks (10, 10') vorgesehen sind.

7. Elektrischer Energiespeicher nach Anspruch 6, **dadurch gekennzeichnet, dass** Wärmetauscher (18) einer jeden Reihenschaltung (28) von Stacks (10, 10') in jeweils einem Wärmespeicher (20, 24) angeordnet sind.

8. Elektrischer Energiespeicher nach einem der Ansprüche 2 bis 6, **dadurch gekennzeichnet, dass** der Einlasswärmetauscher (22) im Wärmespeicher (20, 24) so angeordnet ist, dass er von dem weiteren Wärmetauscher (18) der in Reihe geschalteten Stacks (10, 10') umgeben ist.

9. Elektrischer Energiespeicher nach einem der Ansprüche 1 bis 8, **dadurch gekennzeichnet, dass** der oder die Wärmespeicher (20, 24) in dem thermisch isolierten Raum (4) angeordnet sind und gegenüber diesem wiederum thermisch isoliert ist/sind.

## Claims

1. Electric energy store with a thermally insulated space (4) which has a process gas inlet (6) and a process gas outlet (8), at least two stacks (10) with in turn in each case at least one electrochemical storage cell (12) being arranged in the thermally insulated space (4), and each stack (10) in turn having a process gas inlet (14) and a process gas outlet (16), and at least two stacks (10, 10') being connected in series with respect to the routing of the process gas, **characterized in that** a heat exchanger (18) is arranged between the process gas outlet (16) of the first stack (10) and the process gas inlet (14) of the second stack (10'), which are connected in series, and the heat exchanger (18) is in thermal contact with a heat store (20).

2. Electric energy store according to Claim 1, **characterized in that** an inlet heat exchanger (22) is provided between the process gas feed (6) and the first stack (10) and is in thermal contact with the heat store (20).

3. Electric energy store according to either one of Claims 1 and 2, **characterized in that** the heat store (20) is a latent heat store (24).

4. Electric energy store according to Claim 3, **characterized in that** a phase transformation temperature of a storage material of the latent heat store (24) lies above a process gas inlet temperature and below a process gas outlet temperature.

5. Electric energy store according to one of Claims 1 to 4, **characterized in that** a heating element (26) is arranged in the heat store (20, 24).

6. Electric energy store according to one of Claims 1 to 5, **characterized in that** two or more series connections (n) of at least two stacks (10, 10') are provided.

7. Electric energy store according to Claim 6, **characterized in that** heat exchangers (18) of each series connection (28) of stacks (10, 10') are arranged in each case in a heat store (20, 24).

8. Electric energy store according to one of Claims 2 to 6, **characterized in that** the inlet heat exchanger (22) is arranged in the heat store (20, 24) such that said inlet heat exchanger is surrounded by the further heat exchanger (18) of the series-connected stacks (10, 10').

9. Electric energy store according to one of Claims 1 to 8, **characterized in that** the heat store or heat stores (20, 24) is or are arranged in the thermally insulated space (4) and is or are in turn insulated thermally with respect to the latter.

## Revendications

1. Accumulateur d'énergie électrique, comprenant un espace (4) isolé thermiquement, qui a une arrivée (6) de gaz de processus et une sortie (8) de gaz de processus, dans lequel au moins deux empilements (10), ayant chacun, à nouveau, au moins une cellule (12) d'accumulation électrochimique, sont disposés dans l'espace (4) isolé thermiquement et dans lequel chaque empilement (10) a, à son tour, une entrée (14) pour du gaz de processus et une sortie (16) pour du gaz de processus et au moins deux empilements 10, 10' sont montés en série en ce qui concerne la conduite du gaz de processus, **caractérisé en ce qu'**il est monté, entre la sortie (16), pour du gaz de processus, du premier empilement (10) et l'entrée (14), pour du gaz de processus, du deuxième empilement (10'), qui sont montées en série, un échangeur de chaleur (18) et l'échangeur de chaleur (18) est en contact thermique avec un accumulateur (20) de chaleur.

2. Accumulateur d'énergie électrique suivant la revendication 1, **caractérisé en ce qu'**un échangeur de chaleur (22) d'entrée est prévu entre l'arrivée (6) de gaz de processus et le premier empilement (10) et est en contact thermiquement avec l'accumulateur (20) de chaleur.

3. Accumulateur d'énergie électrique suivant l'une des revendications 1 ou 2, **caractérisé en ce que** l'accumulateur (20) de chaleur est un accumulateur (24) de chaleur latente.

4. Accumulateur d'énergie électrique suivant la revendication 3, **caractérisé en ce qu'**une température de changement de phase d'un matériau d'accumulation de l'accumulateur (24) de chaleur latente est au dessus d'une température d'entrée du gaz de processus et en dessous d'une température de sortie du gaz de processus.

5. Accumulateur d'énergie électrique suivant l'une des revendications 1 à 4, **caractérisé en ce qu'**un élément (26) chauffant est disposé dans l'accumulateur (20, 24) de chaleur.

6. Accumulateur d'énergie électrique suivant l'une des revendications 1 à 5, **caractérisé en ce que** qu'il est prévu deux ou plusieurs circuits (n) série d'au moins deux empilements (10, 10').

7. Accumulateur d'énergie électrique suivant la revendication 6, **caractérisé en ce que** des échangeurs de chaleur (18) de chaque circuit (28) série d'empilements (10, 10') sont disposés dans respectivement un accumulateur (20, 24) de chaleur.

8. Accumulateur d'énergie électrique suivant l'une des revendications 2 à 6, **caractérisé en ce que** l'échangeur de chaleur (22) d'entrée est disposé dans l'accumulateur (20, 24) de chaleur, de manière à être entouré de l'autre échangeur de chaleur (18) de l'empilement (10, 10') monté en série.

9. Accumulateur d'énergie électrique suivant l'une des revendications 1 à 6, **caractérisé en ce que** le ou les accumulateurs de chaleur (20, 24) est/sont disposés dans l'espace (4) isolé thermiquement et est/sont isolés thermiquement à nouveau vis-à-vis de celui-ci.
